# EUROPEAN PATENT APPLICATION

(11) **EP 1 100 017 A1**
(43) Date of publication of application: **16.05.2001**
(21) Application number: 00124225.4
(22) Date of filing: 09.11.2000
(51) Int. Cl.: G06F 11/34, G06F 11/36

(54) **Memory access monitoring and debugging device**

(30) Priority: 09.11.1999 JP 31851999
(71) Applicant: KABUSHIKI KAISHA TOSHIBA, Kawasaki-shi, Kanagawa 212-8572 (JP)
(72) Inventor: Sugiyama, Takashi, Intellectual Property Division, Minato-ku, Tokyo (JP)
(74) Representative: HOFFMANN - EITLE

(57) **Abstract**

A debugging apparatus and a debugging method count the number of accesses to a given address of a memory accessed by a debugging target program, to correctly grasp the accessing states of the memory. The accessing states of the memory are used to optimize program arrangement in the memory and improve the performance of an information processing system that employs the memory.

## Description

This application claims benefit of priority under 35 USC 119 to Japanese Patent Application No. 11-318519 filed on November 9, 1999, the entire contents of which are incorporated by reference herein.

### BACKGROUND OF THE INVENTION

### 1. Field of the Invention

The present invention relates to a debugging apparatus and debugging method used for the development and evaluation of an information processing system employing a microprocessor and memory, to monitor accesses made by the microprocessor to the memory.

### 2. Description of the Related Art

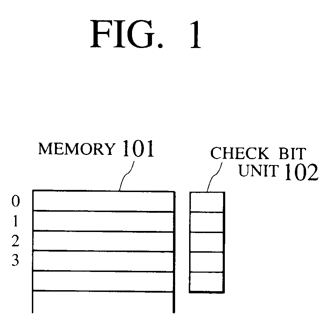

A debugging apparatus is used to debug, for example, an information processing system having a microprocessor and a memory. Figure 1 shows essential part of a debugging apparatus according to a prior art. The debugging apparatus collects information about accesses to a memory 101 made by a microprocessor. To achieve this, the debugging apparatus has a check bit unit 102. Each bit of the unit 102 corresponds to an address of the memory 101. Whenever the microprocessor accesses an address of the memory 101, a corresponding bit of the unit 102 changes its state to record the access. The debugging apparatus refers to the bit states of the unit 102 and obtains information about accesses to the memory 101 made by the microprocessor.

This prior art is capable of only grasping whether or not each memory address has been accessed and is incapable of grasping the number of accesses to each memory address or the type (read or write) of each access.

Since the prior art only provides information about whether or not each memory address has been accessed and never provides information about access frequencies or access types, the prior art is inapplicable to optimizing a memory layout for a program or a program arrangement in a memory according to memory accessing conditions.

### SUMMARY OF THE INVENTION

An object of the present invention is to provide a debugging apparatus and a debugging method capable of correctly grasping memory accessing conditions, to facilitate the optimization of a program arrangement in a memory and improve the performance of an information processing system.

In order to accomplish the object, a first aspect of the present invention provides a debugging apparatus including a counter group having counters each for counting the number of accesses to a given address of a memory during the execution of a debugging target program that accesses the memory, a resetter for resetting the counter group, a starter for enabling the counter group, and a reader for reading counts from the counter group.

A second aspect of the present invention links the counters of the first aspect to all addresses of the memory, respectively.

A third aspect of the present invention provides the debugging apparatus of the first aspect with a mapper for assigning the counter group to optional addresses of the memory.

A fourth aspect of the present invention forms each counter of any one of the first to third aspects with a counter for counting the number of read accesses to a corresponding address of the memory and a counter for counting the number of write accesses to the corresponding address.

A fifth aspect of the present invention provides the counter group of any one of the first to fourth aspects for each memory access width.

A sixth aspect of the present invention provides each counter of the counter group of any one of the first to fifth aspects with an overflow detector.

A seventh aspect of the present invention provides the counter group of any one of the first to sixth aspects for each hierarchical level of the memory, if the memory has a hierarchical structure.

An eighth aspect of the present invention provides the debugging apparatus of any one of the first to seventh aspects with counter groups having different countable maximums.

A ninth aspect of the present invention provides a debugging method including the steps of resetting the access count of a given address of a memory to be accessed by a debugging target program before the execution of the debugging target program, enabling the counting of accesses to the memory, counting the number of accesses to the given address of the memory during the execution of the debugging target program, and reading the counted access number.

Other and further objects and features of the present invention will become obvious upon an understanding of the illustrative embodiments about to be described in connection with the accompanying drawings or will be indicated in the appended claims, and various advantages not referred to herein will occur to one skilled in the art upon employing of the invention in practice.

### BRIEF DESCRIPTION OF THE DRAWINGS

Figure 1 shows essential part of a debugging apparatus according to a prior art;
Fig. 2 shows essential part of a debugging apparatus according to a first embodiment of the present invention;
Fig. 3 shows essential part of a debugging apparatus according to a second embodiment of the present invention;
Fig. 4 shows essential part of a debugging apparatus according to a third embodiment of the present invention;
Fig. 5 shows essential part of a debugging apparatus according to a fourth embodiment of the present invention;
Fig. 6 shows essential part of a debugging apparatus according to a fifth embodiment of the present invention;
Fig. 7 shows essential part of a debugging apparatus according to a sixth embodiment of the present invention;
Fig. 8 shows essential part of a debugging apparatus according to a seventh embodiment of the present invention;
Fig. 9 shows a snapshot of the screen of a PC showing results of the access counts as monitored;
Fig. 10 shows a snapshot of the screen of a PC showing the interface through which a user can select memory areas to be monitored;
Fig. 11(A) is a block diagram showing a first implementation of the present invention consisting of a PC, an ICE(In.Circuit Emulator) connected to the PC through an appropriate communication cable and a circuit board connected to the ICE through a flat cable; and
Fig. 11(B) is a block diagram showing a second implementation of the present invention consisting of a PC, a circuit board connected to the PC through an appropriate communication cable.

### DESCRIPTION OF THE PREFERRED EMBODIMENTS

Various embodiments of the present invention will be described with reference to the accompanying drawings. It is to be noted that the same or similar reference numerals are applied to the same or similar parts and elements throughout the drawings, and the description of the same or similar parts and elements will be omitted or simplified.

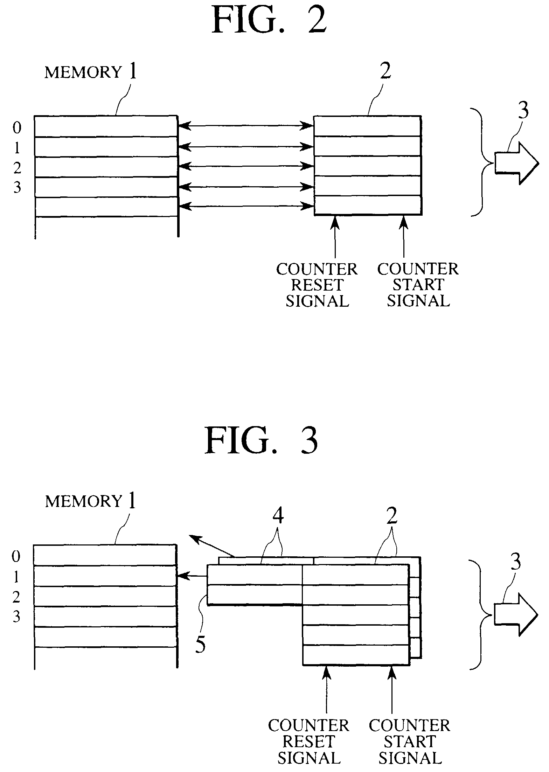

Figure 2 shows a debugging apparatus according to the first embodiment of the present invention. The debug system is typically implemented as an ICE(In-Circuit Emulator). The debugging apparatus has a counter group 2 and a read port 3. A microprocessor of, for example, an information processing system executes a debugging target program under a given hardware environment. The debugging target program accesses a memory 1. To count the numbers of accesses to the memory 1, the counter group 2 has counters provided for addresses of the memory 1, respectively. Whenever an address of the memory 1 is accessed, a counter corresponding to the address increments its count. The read port 3 reads counts from the counter group 2 and transfers them to a controller (not shown) of the debugging apparatus. The debugging target program is a program to be debugged and executed by the information processing system.

To debug the debugging target program, a resetter (not shown) of the debugging apparatus issues a counter reset signal to the counter group 2, to reset and initialize the counters in the counter group 2. Thereafter, a starter (not shown) of the debugging apparatus issues a counter start signal to the counter group 2, to enable the counter group 2 to count. Generally, the counter start signal is supplied to the counter group 2 as soon as the debugging target program is executed. Alternatively, the counter start signal may be supplied to the counter group 2 when the debugging target program reaches, during execution, a memory address whose access must be counted.

As the execution of the debugging target program progresses, a specific address of the memory 1 will be accessed according to an address supplied to a system address bus and an enabled read or write signal. Then, a counter of the counter group 2 corresponding to the accessed address is incremented. In this way, accesses to the memory 1 are counted address by address by the counter group 2. Counts in the counter group 2 are read by the debugging apparatus through the read port 3.

The first embodiment is capable of correctly grasping the number of accesses to each address of the memory 1 during the execution of a debugging target program. According to the memory access counts, the variable and subroutine arrangements of the debugging target program are optimized nor a given hardware environment. For example, variables that are frequently accessed may be arranged in a memory space that is accessible at high speed, and subroutines that are seldom accessed may be arranged in a memory space that is accessible at low speed. In this way, optimization is carried out according to memory access counts.

Figure 3 shows a debugging apparatus according to the second embodiment of the present invention. This embodiment provides a mapper for the debugging apparatus of the first embodiment of Fig. 2. The mapper assigns a counter group 2 having a predetermined number of counters to an optional unit address space (for example, a 256-byte address space) of the memory 1, to check the number of accesses to the address space. The mapper consists of a mapping register 4 for storing the start address of an address space where accesses are counted, and a mapping register 5 for storing the size of the address space. A plurality of counter groups 2 may be prepared and assigned to different address spaces of the memory 1 with each counter group 2 being provided with the mapper.

Before executing a debugging target program, the start address cf a specific address space of the memory 1 is set in the register 4, and the size of the address space is set in the register 5. Then, the debugging target program is executed. According to a signal indicating an access to the memory 1, the data in the registers 4 and 5, and an access address, the counter group 2 performs access counting. The counter group 2 is reset, enabled, and read like the first embodiment of Fig. 2.

Unlike the first embodiment that prepares counters for all addresses of the memory 1, respectively, the second embodiment prepares only a required number of counters for a required address space of the memory 1. Accordingly, the second embodiment is capable of providing the effect of the present invention with reduced hardware.

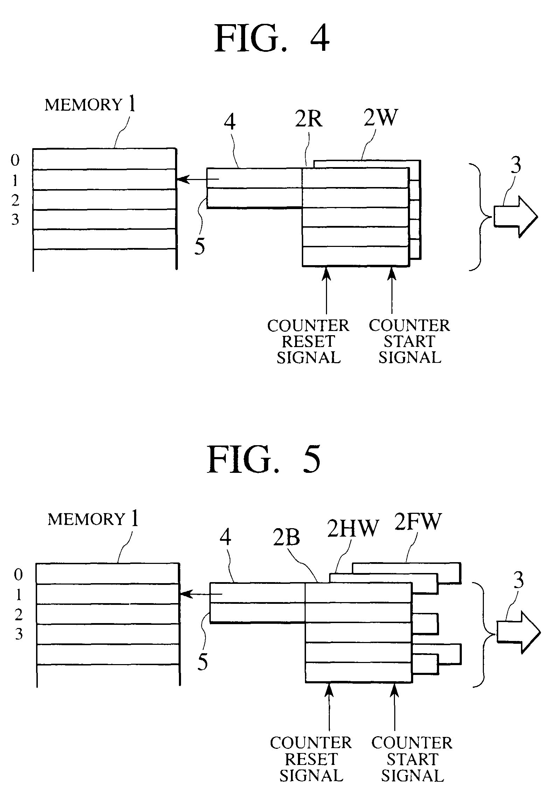

Figure 4 shows a debugging apparatus according to the third embodiment of the present invention. Instead of the counter group 2 of the second embodiment of Fig. 3, the third embodiment employs a read counter group 2R and a write counter group 2W. The read counter group 2R has read counters each for counting read accesses to a corresponding address of the memory 1 according to address and read signals. The write counter group 2W has write counters each for counting write accesses to a corresponding address of the memory 1 according to address and write signals. Other arrangements of the third embodiment are the same as those of the second embodiment.

The third embodiment is capable of separately counting the numbers of read and write accesses to a specific address space of the memory 1, to grasp the detailed accessing states of the memory 1. The read and write access counts are useful when determining whether or not read-only data or programs must be stored in an external ROM, or whether or not data or programs that are read-only but are frequently accessed must be stored in a high·speed RAM instead of an external ROM. Through these determinations, the performance of an information processing system will be improved.

Figure 5 shows a debugging apparatus according to the fourth embodiment of the present invention. This embodiment employs counter groups of different access widths, instead of the counter groups 2 of the second embodiment of Fig. 3. For example, the counter groups of the fourth embodiment include a counter group 2B having counters each for counting byte accesses, a counter group 2HW having counters each for counting half-word (2 bytes) accesses, and a counter group 2FW having counters each for counting full-word (4 bytes) accesses. The other arrangements of the fourth embodiment are the same as those of the second embodiment of Fig. 3.

The fourth embodiment is capable of grasping the numbers of accesses of different access widths to the memory 1. If there is a microprocessor that accesses an internal memory in 4-byte width and an external memory in 2-byte width and if there are many 4-byte accesses to the external memory, the microprocessor must carry out each 4-byte access to the external memory in two times. This increases bus cycles and deteriorates system performance. In this case, the fourth embodiment is capable of determining data that involve 4-byte accesses, so that such data is moved into the internal memory to improve system performance.

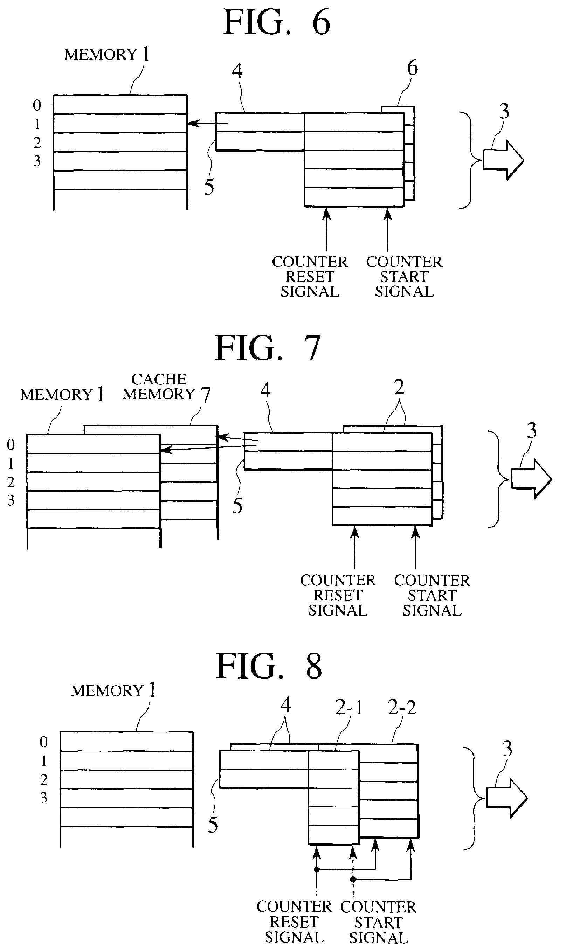

Figure 6 shows a debugging apparatus according to the fifth embodiment of the present invention. This embodiment provides an overflow detector for each counter of the counter group 2 of the second embodiment of Fig. 3. The overflow detector detects an overflow in a corresponding counter and notifies the overflow to the debugging apparatus. The other arrangements of the fifth embodiment are the same as those of the second embodiment of Fig. 3. The overflow detector may be an overflow bit 6 provided for each counter of the counter group 2. An OR signal of all or part of the overflow bits 6 is used as a notice signal to the debugging apparatus

If a debugging target program is run for a long time, most of the counters may overflow to lose memory access data. To avoid this, the overflow detectors of the fifth embodiment notify an overflow event to the debugging apparatus if any one of the counters causes an overflow. Upon receiving an overflow notice of even a single counter, the debugging apparatus may stop the debugging target program. Alternatively, the debugging apparatus may stop the debugging target program if a given number of counters cause overflows. The debugging apparatus may not stop the debugging target program in response to an overflow event but may simply record overflow events with the time of each overflow event. In this way, the debugging apparatus of the fifth embodiment is capable of flexibly collecting necessary information and taking proper countermeasures.

Figure 7 shows a debugging apparatus according to the sixth embodiment of the present invention. This embodiment provides the counter group 2 of the second embodiment of Fig. 3 for each hierarchical level of a memory, if the memory has a hierarchical structure. The other arrangements of the sixth embodiment are the same as those of the second embodiment of Fig. 3. In Fig. 7, the memory 1 is provided with a cache memory 7, to form a hierarchical memory structure. Corresponding addresses of the memory 1 (main memory) and cache memory 7 are set in a mapping register 4.

The sixth embodiment is capable of grasping the hit ratio of each address of the cache memory 7. The hit ratios are useful when optimizing the structure of the cache memory 7, optimizing the arrangement of programs and data in the memories, determining whether or not programs or data must be locked at a part of the cache memory 7, or determining data that must be stored in a locked space of the cache memory 7.

Figure 8 shows a debugging apparatus according to the seventh embodiment of the present invention. This embodiment replaces the counter groups 2 of the second embodiment of Fig. 3 with counter groups having different countable maximums. The counter groups of the seventh embodiment include, for example, a 16-bit counter group 2-1 and a 32-bit counter group 2-2. Each of the counter groups 2-1 and 2-2 has mapping registers 4 and 5 to realize independent mapping. The other arrangements of the seventh embodiment are the same as those of the second embodiment of Fig. 3.

According to the seventh embodiment, the counter groups 2-1 and 2-2 are assigned to memory spaces of the memory 1 depending on estimated access frequencies of the memory spaces. This embodiment is capable of examining memory access states with less hardware, compared with a debugging structure that employs, for example, only 32-bit counters.

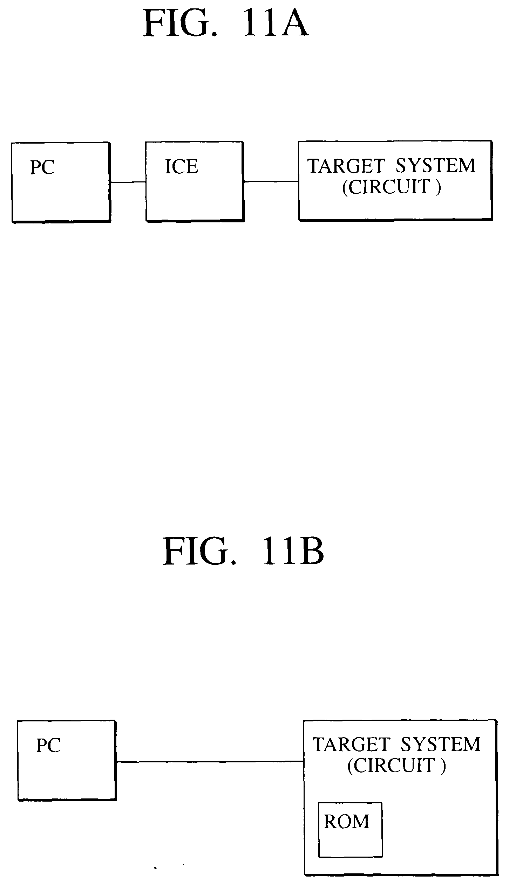

Next, several typical examples of implementations of the debugging apparatus in accordance with the present invention will be explained. Fig. 11(A) is a block diagram showing a first implementation of the present invention consisting of a PC, an ICE(In-Circuit Emulator) connected to the PC through an appropriate communication cable and a circuit board connected to the ICE through a flat cable. One end of the flat cable is provided with a probe which is inserted to the processor socket of the circuit board in place of a microprocessor. The target system is implemented on the circuit board with an application program to be debugged.

In this case, the counters for counting access frequencies as described above are implemented as a hardwired mechanism within the ICE, which emulates the microprocessor of the target system while several items of debug information inclusive of the access frequencies are collected and transferred to the PC through the communication cable

Fig. 11(B) is a block diagram showing a second implementation of the present invention consisting of a PC, a circuit board connected to the PC through an appropriate communication cable. In this case, the counters for counting access frequencies as described above are implemented as variables of a debug monitor program which has been written to a ROM of the target system together with the application program. The debug monitor program is designed to monitor the access frequencies as described above. The debug program is also designed to transfer the debug information to the PC through the communication cable.

This monitoring mechanism may be implemented through exceptions triggered by debug registers and so forth. Alternatively, hardwired mechanism may be implemented within the target system for snooping the access to the bus in order to collect and transfer several items of debug information inclusive of the access frequencies.

The debugging apparatus in accordance with the present invention can be implemented simply as a simulation as a third implementation of the present invention. In this case, a virtual system is implemented only within a PC in order to run the application program on the virtual system as well as a debugger monitor program while the counters for counting access frequencies are implemented as variables of the monitoring program.

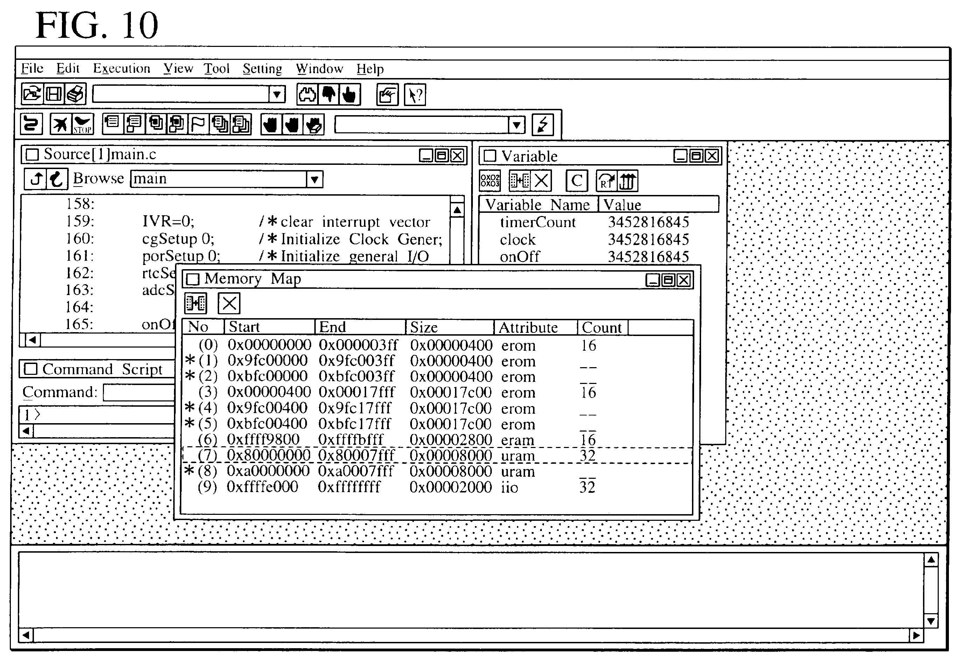

In an actual emvironment, a user can conduct his debugging procedure as follows. Fig. 10 is a snapshot of the screen of a PC showing the interface through which a user can select memory areas to be monitored. The target connected to the debugger program running on the PC may typically be one of an ICE, a simulator and a debug monitor program which is a software capable of writing data to the ROM of the target system as described above. In this case, however, the target is a simulator which can be executed in synchronism with the debugger monitor program in the same PC. Namely, the debugging process can be conducted within the single PC in this case.

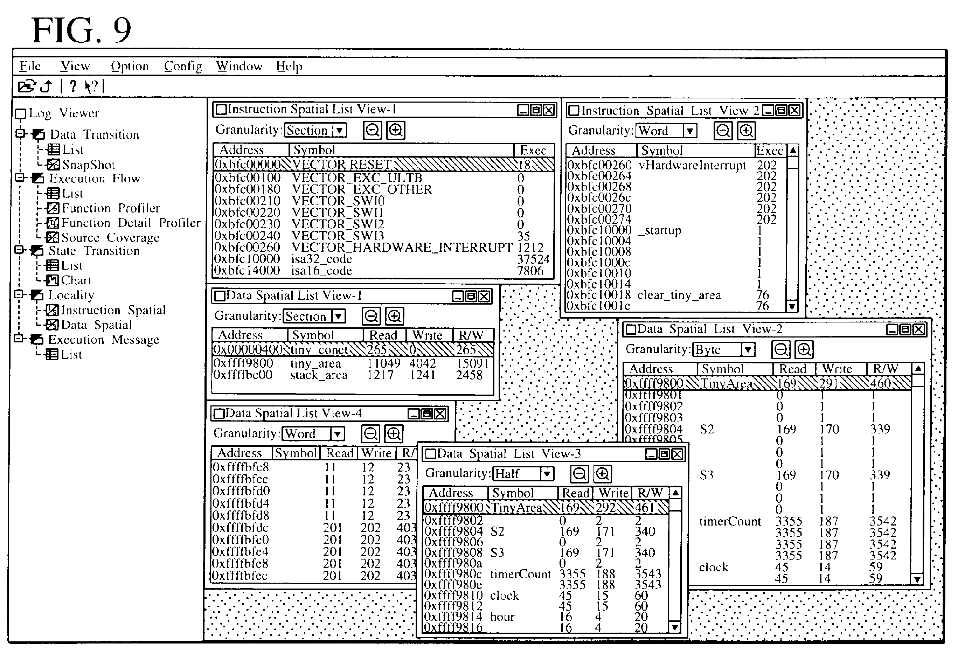

As illustrated in the figure, a user can select a pair of the start address and the end address of each memory area and the size of the preferred counter (i.e., 16 bits, 32 bit, or "--" indicative of not counted). The attributes of the respective memory area (the types of the corresponding memory devices) and the size of each memory area are also displayed as illustrated. The results of the access counts as monitored are displayed as illustrated in Fig. 9. In Fig. 9, the access counts can be confirmed with a desired resolution by selecting the granularity, eg, byte, half, word and section.

The numbers of memory accesses obtained by any one of the embodiments may be displayed with related information such as corresponding addresses on a display of the debugging apparatus.

The embodiments mentioned above are achievable discretely or in combination with one another. For example, the embodiment of Fig. 4 may be combined with the embodiments of Figs. 5 and 8, to provide combinational effects of these embodiments.

In summary, the present invention provides a debugging apparatus capable of correctly grasping memory access states during the execution of a debugging target program and optimizing the arrangement of variables and subroutines in a hardware environment where the debugging target program is rur.

The debugging apparatus of the present invention is also capable of assigning a limited number of counters to required memory addresses without preparing counters for all memory addresses, respectively, thereby minimizing hardware requirements.

The debugging apparatus of the present invention is also capable of separately counting the numbers of write and read accesses, to help correctly select memory types.

The debugging apparatus of the present invention is also capable of separately counting the numbers of accesses of different access widths, to help correctly select memory types and improve system performance.

The debugging apparatus of the present invention is also capable of detecting counter overflows, to precisely grasp memory accessing states. The debugging apparatus of the present invention is also capable of counting accesses to hierarchically structured memories.

The debugging apparatus of the present invention is also capable of assigning counters of different countable maximums to different memory addresses, to examine memory accessing states with less hardware resources.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A debugging apparatus comprising:
a counter group having counters each for counting the number of accesses to a given address of a memory during the execution of a debugging target program that accesses the memory;
resetting means for resetting the counter group;
starting means for enabling the counter group; and
reading means for reading counts from the counter group.

2. The debugging apparatus of claim 1, wherein:
the counters are linked to all addresses of the memory, respectively.

3. The debugging apparatus of claim 1, further comprising:
mapping means for assigning the counter group to optional addresses of the memory.

4. The debugging apparatus of any one of claims 1 to 3, wherein each counter of the counter group consists of:
a counter for counting the number of read accesses to a given address of the memory; and
a counter for counting the number of write accesses to the given address.

5. The debugging apparatus of any one of claims 1 to 4, wherein:
the counter group is provided for each memory access width

6. The debugging apparatus of any one of claims 1 to 5, wherein each counter of the counter group is provided with overflow detecting means.

7. The debugging apparatus of any one of claims 1 to 6, wherein:
the counter group is provided for each hierarchical level of the memory, if the memory is hierarchically structured.

8. The debugging apparatus of any one of claims 1 to 7, wherein:
the counters have different countable maximums counter group by counter group.

9. A debugging method comprising the steps of:
resetting the access count of a given address of a memory to be accessed by a debugging target program before the execution of the debugging target program;
enabling the counting of accesses to the memory;
counting the number of accesses to the given address of the memory during the execution of the debugging target program; and
reading the counted access number.
